# EUROPEAN PATENT SPECIFICATION

(11) **EP 4 206 513 B1**
(45) Date of publication and mention of the grant of the patent: **18.03.2026**
(21) Application number: 22216131.7
(22) Date of filing: 22.12.2022
(51) Int. Cl.: F16M 11/18, F16M 11/42, F16M 13/02

(54) **DEVICE AND METHOD FOR MAINTAINING EQUIPMENT**
VORRICHTUNG UND VERFAHREN ZUR WARTUNG VON AUSRÜSTUNG
DISPOSITIF ET PROCÉDÉ DE MAINTENANCE D'ÉQUIPEMENT

(30) Priority: 29.12.2021 CN 202111636158
(43) Date of publication of application: 05.07.2023
(73) Proprietor: Nuctech Company Limited, TongFang Building Shuangqinglu Road Haidian District Beijing 100084 (CN)
(72) Inventor: HUANG, Qingping, Beijing, 100084 (CN); ZHOU, Yong, Beijing, 100084 (CN); DING, Hui, Beijing, 100084 (CN); HU, Baoyuan, Beijing, 100084 (CN); WEI, Bintao, Beijing, 100084 (CN)
(74) Representative: Gunzelmann, Rainer

(56) References cited:
- CN-U- 201 728 736
- US-A1- 2008 187 431
- US-A1- 2016 161 048

## Description

### TECHNICAL FIELD

The present disclosure relates to a field of equipment maintenance technology, and in particular, to a device and a method for maintaining an equipment.

### BACKGROUND

For various types of equipment, it is generally necessary to reserve a sufficient space for maintenance. For example, when a security inspection equipment is maintained, there is a minimum working width requirement on two sides. However, due to a limitation of an equipment application site, a width between an equipment and a wall in some sites may be narrow, so that a space on one side or two sides of the equipment may be small, which may be insufficient for maintenance operation of the equipment. CN 201 728 736 U A discloses a device for maintaining an equipment. US 2016/161048 A1 concerns a system for laterally moving an industrial machine. The system includes a pair of rail elements configured to be positioned laterally below and support the industrial machine, the rail elements allowing the industrial machine to be moved laterally from a first operative position to a second, maintenance position; and a pair of linear actuators configured to laterally move the industrial machine as from the first, operative position to the second, maintenance position. The rail elements include a first skid configured to couple laterally to an underside of the industrial machine at a first axial position; and a second skid configured to couple laterally to an underside of the industrial machine at a second axial position. First and second segmented support rails are positioned in sliding, aligned contact with the first and second skid, respectively, and are configured to be supported on a respective machine foundation. US 2008/187431 A1 concerns a method of using a gas turbine engine. The method include supporting a first portion of the gas turbine engine on one or more guide tracks extending in a first direction, the first direction being at an angle to a longitudinal axis of the gas turbine engine. The method also includes moving the first portion of the gas turbine engine in the first direction on the guide tracks independently of a second portion of the gas turbine engine.

### SUMMARY

The present invention is defined by the appended claims. In one aspect, there is provided a device for maintaining an equipment, configured to maintain a to-be-maintained equipment, the to-be-maintained equipment includes a first side and a second side opposite to the first side, and the device includes: at least one guide rail extending in a first direction, wherein the first direction is a direction pointing from the first side to the second side; a sliding mechanism arranged on the guide rail and configured to support the to-be-maintained equipment; and a driving mechanism configured to drive the sliding mechanism and the to-be-maintained equipment to move along the guide rail, wherein the device for maintaining an equipment is configured to allow the to-be-maintained equipment to move along the guide rail to change a maintenance space on the first side or the second side.

According to the invention, the driving mechanism includes: a support base; and a hydraulic cylinder arranged on the support base and configured to drive the sliding mechanism and the to-be-maintained equipment to move.

According to the inventon, the driving mechanism further includes: a connecting base arranged on a piston rod of the hydraulic cylinder and configured to be connected with the sliding mechanism and/or the to-be-maintained equipment.

According to the invention, the piston rod of the hydraulic cylinder is provided with a joint bearing, and the connecting base is hinged with the joint bearing around a first rotating shaft, and the hydraulic cylinder is hinged with the support base around a second rotating shaft and a frame configured to support the to be maintained equipment.

According to embodiments of the present disclosure, the sliding mechanism includes: a roller rotatably arranged on the frame, wherein the roller is configured to roll along the guide rail under an action of an external force, so that the frame and the to-be-maintained equipment move along the guide rail.

According to embodiments of the present disclosure, the frame has a load-bearing side, and the load-bearing side is provided with a damping layer, wherein the to-be-maintained equipment is placed on the damping layer in a state where the to-be-maintained equipment is moved along the guide rail.

According to embodiments of the present disclosure, the guide rail adopts an H-shaped steel, and the roller is configured to roll in a side groove of the H-shaped steel.

According to embodiments of the present disclosure, the frame is provided with a positioning block configured to be fixedly connected with the to-be-maintained equipment.

According to embodiments of the present disclosure, each of the at least one guide rail is provided with two sliding mechanisms, and the two sliding mechanisms are respectively located on two sides of the to-be-maintained equipment in a state where the to-be-maintained equipment is moved along the guide rail.

According to embodiments of the present disclosure, two ends of the guide rail are provided with a fixed base configured to fix the guide rail and limit the sliding mechanism.

In another aspect, there is provided a method for maintaining an equipment, including: moving the to-be-maintained equipment by using the device for maintaining an equipment described above, so that a maintenance space on a second side of the to-be-maintained equipment increases after the to-be-maintained equipment is moved to a first side, wherein the first side and the second side are respectively located on opposite sides of the to-be-maintained equipment.

### BRIEF DESCRIPTION OF THE DRAWINGS

Other objectives and advantages of the present disclosure will be more apparent through the following description of the present disclosure with reference to the accompanying drawings, which may assist to provide a thorough understanding of the present disclosure.
FIG. 1 shows a schematic diagram of a principle of an equipment maintenance in related art.
FIG. 2 shows another schematic diagram of a principle of an equipment maintenance in related art.
FIG. 3 shows a schematic diagram of an application scene of a device for maintaining an equipment according to embodiments of the present disclosure.
FIG. 4 shows a schematic diagram of a connecting structure of a guide rail and a sliding mechanism included in a device for maintaining an equipment according to embodiments of the present disclosure.
FIG. 5 shows a structural diagram of a guide rail included in a device for maintaining an equipment according to embodiments of the present disclosure.
FIG. 6 shows a structural diagram of a sliding mechanism included in a device for maintaining an equipment according to embodiments of the present disclosure.
FIG. 7 shows a structural diagram of a fixed base included in a device for maintaining an equipment according to embodiments of the present disclosure.
FIG. 8 shows a structural diagram of a driving mechanism included in a device for maintaining an equipment according to embodiments of the present disclosure.
FIG. 9 shows a schematic diagram of an application scene of a method for maintaining an equipment according to embodiments of the present disclosure.
FIG. 10 shows a schematic diagram of an application mode of a method for maintaining an equipment according to embodiments of the present disclosure.
FIG. 11 shows a schematic diagram of another application mode of a method for maintaining an equipment according to embodiments of the present disclosure.

In the drawings, 1. To-be-maintained equipment; 2. Reference plane; 3. Guide rail; 31. Guide rail body; 32. Base plate; 4. Sliding mechanism; 41. Frame; 411. Load-bearing side; 42. Roller; 43. Damping layer; 44. Positioning block; 5. Driving mechanism; 51. Support base; 52. Hydraulic cylinder; 53. Hydraulic station; 54. Connecting base; 55. First rotating shaft; 56. Second rotating shaft; 57. Oil pipe; 6. Fixed base; 7. Wall.

It should be noted that, for the sake of clarity, in the accompanying drawings used to describe embodiments of the present disclosure, a size of a structure or region may be enlarged or reduced, that is, the accompanying drawings is not drawn according to an actual scale.

### DETAILED DESCRIPTION OF EMBODIMENTS

In order to make objectives, technical solutions and advantages of embodiments of the present disclosure more clear, technical solutions in embodiments of the present disclosure will be described clearly and completely with reference to the accompanying drawings. It is obvious that embodiments described are only some embodiments of the present disclosure, rather than all embodiments.

Unless otherwise defined, technical terms or scientific terms used in the present disclosure should be given their ordinary meaning as understood by those of ordinary skill in the art. The use of "first", "second" and the like in the present disclosure is not intended to indicate any order, quantity or importance, but rather is used to distinguish different components. The word "comprising", "including", or the like means that the element or object preceding the word includes the element or object listed after the word and its equivalent, but does not exclude other elements or objects.

In present disclosure, unless otherwise specifically stated, directional terms such as "up", "down", "left", "right", "inside", and "outside" are used to indicate orientations or position relationships shown in the drawings, merely for convenience of describing the present disclosure, rather than indicating or implying that the devices, elements, or components referred to must have a particular orientation, be constructed or operated in a particular orientation. It should be understood that when the absolute positions of the described objects change, relative position relationships they represent may change accordingly. Accordingly, these directional terms should not be construed as limiting the present disclosure.

In the maintenance of large mechanical equipment, maintenance personnel are generally required to carry out maintenance operations near a local position of the equipment. In some narrow sites, a distance between a side of an equipment and a site wall may be too small, resulting in insufficient maintenance space for maintenance personnel. Therefore, it is generally necessary to temporarily move the location of the equipment during maintenance, so as to leave enough maintenance space. At present, the equipment is generally moved to a spacious place for maintenance by using a moving tool such as a caster or a forklift or by hoisting. In the above-mentioned solution, moving the equipment involves a large amount of work, has a large impact on a surrounding region, and takes a long time, delaying a normal use of the equipment.

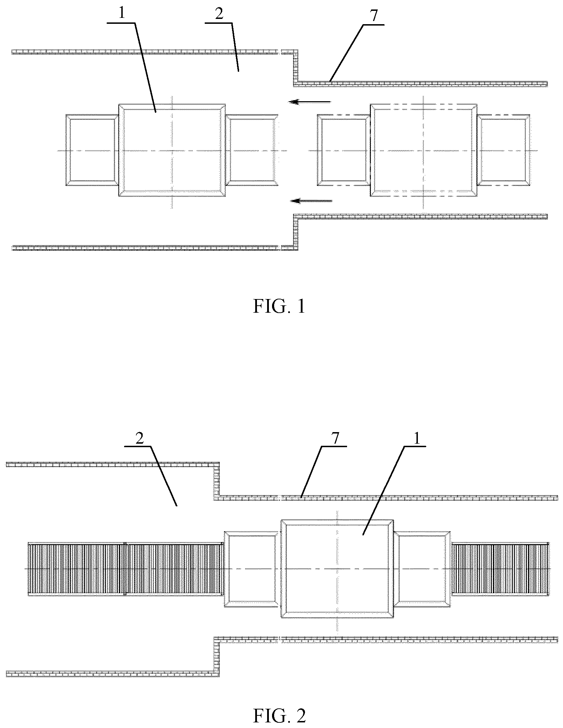

. As shown in FIG. 1 and FIG. 2, existing solutions generally uses a moving tool such as a caster or a forklift to move the equipment to a spacious place for maintenance. For the equipment installed on a sandwich steel platform, the equipment is generally hoisted to a spacious space for maintenance, and then is lifted to the steel platform after the maintenance is completed. In the above-mentioned solution, moving the equipment involves a large amount of work, has a large impact on a surrounding region, and takes a long time, delaying a normal use of the equipment. Moreover, when an equipment access is connected with a conveying line or the equipment is placed on a steel frame platform, the above-mentioned operation solution is difficult to meet a maintenance requirement of the equipment

Embodiments of the present disclosure provide a device for maintaining an equipment and method. The device for maintaining an equipment is used to maintain a to-be-maintained equipment 1, wherein the to-be-maintained equipment 1 includes a first side and a second side opposite to the first side; the device for maintaining an equipment includes a reference plane 2; at least one guide rail 3 arranged on the reference plane 2, wherein the at least one guide rail 3 extends extending in a first direction, and the first direction is a direction pointing from the first side to the second side; a sliding mechanism 4 arranged on the guide rail 3 and configured to support the to-be-maintained equipment 1; and a driving mechanism 5 arranged on the reference plane 2 and configured to drive the sliding mechanism 4 and the to-be-maintained equipment 1 to move along the guide rail 3, wherein the device for maintaining an equipment is configured to allow the to-be-maintained equipment 1 to move along the guide rail 3 to change a maintenance space on the first side or the second side. Through the above-mentioned structural design, the sliding mechanism 4 that may move along the guide rail 3 may be provided at the bottom of the to-be-maintained equipment 1. Under a driving action of the driving mechanism 5, the to-be-maintained equipment 1 placed on the sliding mechanism 4 may move to the first or second side as a whole, thus compressing a working space on one side of the to-be-maintained equipment 1 and expanding a working space on another side of the to-be-maintained equipment 1, so as to meet the maintenance space requirements of to-be-maintained equipment 1 when the space on two sides of the to-be-maintained equipment 1 is narrow.

It should be noted that "reference plane 2" refers to an installation surface of to-be-maintained equipment 1 during operation. For example, when the to-be-maintained equipment 1 is installed on the ground, steel platform and other structures, the reference plane 2 refers to a surface of the ground, steel platform, etc. "Maintenance space on the first side of the to-be-maintained equipment" refers to a space between the first side of the to-be-maintained equipment and a wall 7, and "maintenance space on the second side of the to-be-maintained equipment" refers to a space between the second side of the to-be-maintained equipment and the wall 7. The "reference plane 2" and "maintenance space" in embodiments of the present disclosure may be understood according to the description here, which will not be repeated in the following.

It should also be noted that the first side and the second side are located on opposite sides of the to-be-maintained equipment 1. For example, in a width direction of the to-be-maintained equipment 1, if the first side refers to the left side of the to-be-maintained equipment 1, then the second side refers to the right side of the to-be-maintained equipment 1; and if the first side refers to the right side of to-be-maintained equipment 1, then the second side refers to the left side of to-be-maintained equipment 1. It should be understood that the first side and the second side may also be opposite sides in a length direction or other horizontal directions of the to-be-maintained equipment 1. For the convenience of description, in embodiments of the present disclosure, taking the width direction of the to-be-maintained equipment 1 as an example, the first side and the second side are located on opposite sides of the to-be-maintained equipment 1 in the width direction, that is, the to-be-maintained equipment 1 is horizontally translated between the first side and the second side.

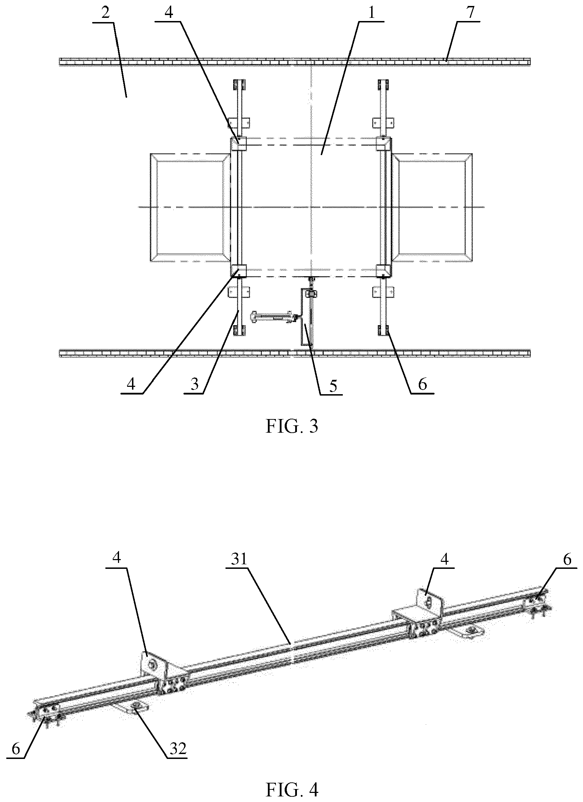

FIG. 3 shows a schematic diagram of an application scene of a device for maintaining an equipment according to embodiments of the present disclosure.

Referring to FIG. 3, the device for maintaining an equipment according to embodiments of the present disclosure at least includes a reference plane 2, a guide rail 3, a sliding mechanism 4 and a driving mechanism 5. The guide rail 3 is fixed on the reference plane 2, the sliding mechanism 4 is fixed on the guide rail 3, and the sliding mechanism 4 may move along the guide rail 3. The to-be-maintained equipment 1 is placed on the sliding mechanism 4. The driving mechanism 5 may drive the to-be-maintained equipment 1 and the sliding mechanism 4 to move along the guide rail 3, so that the to-be-maintained equipment 1 moves to the first side, a distance between the to-be-maintained equipment 1 and the wall 7 on the first side is shorter, a distance between the to-be-maintained equipment 1 and the wall 7 on the second side is longer, so as to enlarge a space of the second side, and facilitate the maintenance operation of the to-be-maintained equipment 1 on the second side.

In embodiments of the present disclosure, two mutually parallel guide rails 3 are laid in the width direction of the to-be-maintained equipment 1, and each guide rail 3 may be provided with at least one sliding mechanism 4. After the to-be-maintained equipment 1 is installed on the sliding mechanism 4, the to-be-maintained equipment 1 may move laterally on the guide rail 3 through a driving of the driving mechanism 5.

It should be understood that, in embodiments of the present disclosure, two guide rails 3 are only taken as an example. In other embodiments, the number of guide rails 3 is not limited to two, and a plurality of guide rails 3 may cooperate to achieve a translation of the to-be-maintained equipment 1.

For various types of to-be-maintained equipment 1 with different bottom structures, the device for maintaining an equipment of embodiments of the present disclosure may flexibly select an installation position of the guide rail 3 and the sliding mechanism 4. Specifically, the guide rail 3 and the sliding mechanism 4 may be provided in the middle of to-be-maintained equipment 1, between the bottom frame of to-be-maintained equipment 1 and the reference plane 2, at two ends of to-be-maintained equipment 1, or at other positions. For example, when the guide rail 3 and the sliding mechanism 4 are provided between the bottom frame of the to-be-maintained equipment 1 and the reference plane 2, the space between the bottom frame of the to-be-maintained equipment 1 and the reference plane 2 may be fully utilized, and the guide rail 3 and the sliding mechanism 4 may be used to help the to-be-maintained equipment 1 disperse the load on the reference plane 2 on the premise of not changing an installation height of the to-be-maintained equipment 1 as much as possible.

FIG. 4 shows a schematic diagram of a connecting structure of a guide rail and a sliding mechanism included in a device for maintaining an equipment according to embodiments of the present disclosure.

Referring to FIG. 4, in embodiments of the present disclosure, each guide rail 3 is provided with two sliding mechanisms 4. The two sliding mechanisms 4 are used to support the to-be-maintained equipment 1, which may increase a stability of the to-be-maintained equipment 1 when moving along the guide rail 3.

In a state where the to-be-maintained equipment 1 is moved along the guide rail 3, the two sliding mechanisms 4 are respectively located on two sides of the to-be-maintained equipment and support the to-be-maintained equipment from two sides. The two sliding mechanisms 4 are mirrored relative to the first plane. The first plane (not shown in FIG. 4) is perpendicular to an extension direction of the guide rail 3, and a distance between the two sliding mechanisms 4 and the first plane is equal. By mirroring the two sliding mechanisms 4, the two sliding mechanisms 4 may be used to clamp the to-be-maintained equipment 1 from two sides of the to-be-maintained equipment 1 to ensure that the to-be-maintained equipment 1 is firmly connected with the sliding mechanism 4.

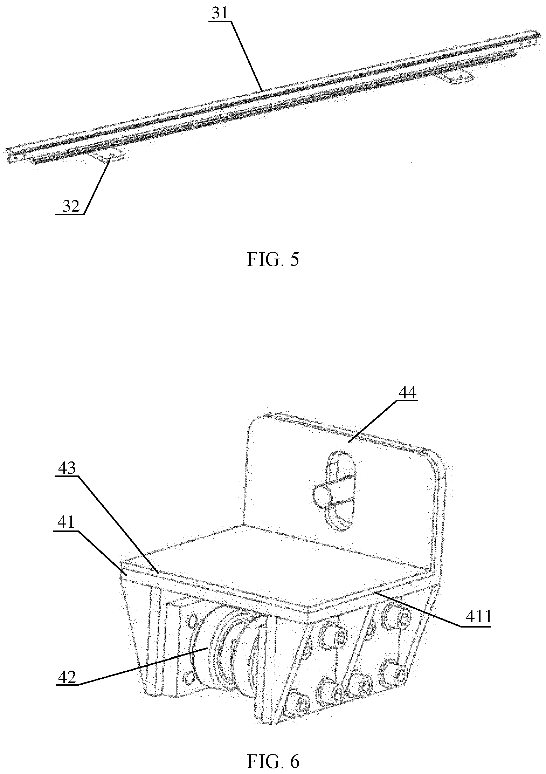

FIG. 5 shows a structural diagram of a guide rail 3 included in a device for maintaining an equipment according to embodiments of the present disclosure.

Referring to FIG. 5, the guide rail 3 includes a guide rail body 31 and at least one base plate 32 arranged on the guide rail body 31. The guide rail body 31 is fixed on the reference plane 2 through the base plate 32. For example, the base plate 32 may be welded with the bottom of the guide rail body 31, and then fixed on the reference plane 2 by a bolt.

In embodiments of the present disclosure, the guide rail body 31 adopts an H-shaped steel, which has strong rigidity and may be better used to support the weight of the to-be-maintained equipment 1. Two base plates 32 are welded at the bottom of the guide rail body 31. The connection stability between the guide rail body 31 and the reference plane 2 may be further enhanced by using a plurality of base plates 32. It should be understood that the material and shape of the guide rail body 31 may be selected according to actual working conditions. Based on the general knowledge of those skilled in the art, a rail, a channel steel, a U-shaped steel, and the like may also be selected as the guide rail body 31.

In embodiments of the present disclosure, the guide rail body 31 is a complete straight track, and may be pre-installed to the bottom of the to-be-maintained equipment 1 before use. In other embodiments, the guide rail body 31 may adopt segmented rails, and a plurality of segments of rails may be spliced into a complete guide rail body 31. The removable segmented structure may improve the installation flexibility of the guide rail body 31.

FIG. 6 shows a structural diagram of a sliding mechanism included in a device for maintaining an equipment according to embodiments of the present disclosure.

Referring to FIG. 6, in embodiments of the present disclosure, the sliding mechanism 4 includes a frame 41 and a roller 42 rotatably arranged on the frame 41. The frame 41 is used to support the to-be-maintained equipment 1, and the roller 42 may be rotatably connected with the frame 41 through a bearing. Under an action of an external force, the roller 42 may roll along the guide rail 3, so that the frame 41 and the to-be-maintained equipment 1 arranged on the frame 41 move along the guide rail 3. In embodiments of the present disclosure, a combination of the guide rail 3 and the roller 42 may reduce a resistance of the to-be-maintained equipment 1 in a moving process.

Specifically, when the H-shaped steel is used as the guide rail 3, the roller 42 rolls in a side groove of the H-shaped steel. For example, referring to FIG. 4 and FIG. 6, in a state where the sliding mechanism 4 is installed on the guide rail 3, the sliding mechanisms 4 on two sides of the guide rail 3 are provided with rollers 42, that is, two rollers 42 are used to roll in the grooves on two sides of the H-shaped steel. In other embodiments, a single side roller 42 may also be used, that is, in a state where the sliding mechanism 4 is installed on the guide rail 3, one side of the guide rail 3 is provided with the roller 42, and the single side roller 42 cooperates with the guide rail 3 to realize rolling. It should be understood that the roller 42 is not limited to rolling in the side groove of the H-shaped steel, but also rolling on a surface of the guide rail 3. The number and specific setting method of the roller 42 may be determined according to actual working conditions, which is not limited in embodiments of the present disclosure.

It should be noted that a specific structure of the sliding mechanism 4 is not limited to the structural form of the above-mentioned roller 42. In other embodiments, a linear guide rail, a sliding platform and the like may also be used to drive the to-be-maintained equipment 1 to move.

In some exemplary embodiments, the frame 41 has a load-bearing side 411 parallel to the reference plane 2. After the frame 41 is fixed on the guide rail 3 by the roller 42, the to-be-maintained equipment 1 is placed on the load-bearing side 411 of the frame 41. The load-bearing side 411 is provided with a damping layer 43. In a state where the to-be-maintained equipment 1 is moved along the guide rail 3, the bottom of the to-be-maintained equipment 1 directly contacts the damping layer 43. The damping layer 43 may be made of rubber or other materials. For example, the damping layer 43 may be designed in a form of a rubber pad. The rubber pad may be used as a contact surface with the to-be-maintained equipment 1, which may reduce a vibration and avoid scratching a paint on the surface of the to-be-maintained equipment 1.

The frame 41 is further provided with a positioning block 44 for fixed connection with the to-be-maintained equipment 1. The positioning block 44 cooperates with the frame 41 to connect the to-be-maintained equipment 1 and the roller 42. The frame 41 may be connected and fixed with the to-be-maintained equipment 1 through the positioning block 44 to ensure that the to-be-maintained equipment 1 will not be separated from the sliding mechanism 4 when moving along the guide rail 3.

Optionally, the positioning block 44 and the frame 41 may be in an integrated structure, and the positioning block 44 may be vertically arranged on an upper surface of the frame 41. Referring to FIG. 6, the positioning block 44 is a plate structure, which forms a 90° included angle with the upper surface of the frame 41. When the to-be-maintained equipment 1 is installed on the sliding mechanism 4, the 90° included angle enables the sliding mechanism 4 to fit with the bottom and side of the to-be-maintained equipment 1, preventing a noise generated during an equipment movement due to a loose connection between the sliding mechanism 4 and the to-be-maintained equipment 1. The positioning block 44 is according to the invention provided with a through hole, and the positioning block 44 may be connected and fixed with the side of the to-be-maintained equipment 1 through the bolt and the through hole.

It may be understood that in some other embodiments, the shape of the positioning block 44 and the connection structure between the positioning block 44 and the to-be-maintained equipment 1 are not limited to the way shown in FIG. 6. For example, the positioning block 44 may be set as a structural form parallel to an upper surface of the frame 41, or the positioning block 44 may be a part of the frame 41, which is used to connect with the to-be-maintained equipment 1. The positioning block 44 may also be connected and fixed with the to-be-maintained equipment 1 by welding or the like.

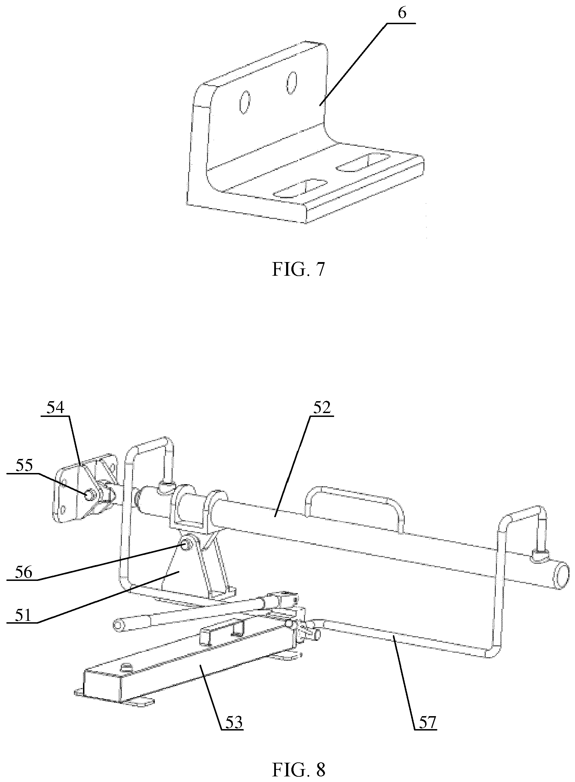

FIG. 7 shows a structural diagram of a fixed base included in a device for maintaining an equipment according to embodiments of the present disclosure.

In embodiments of the present disclosure, two ends of the guide rail 3 are provided with a fixed base 6, which may be used to fix the guide rail 3 on the one hand to ensure a stable connection between the guide rail 3 and the reference plane 2, and to limit the sliding mechanism 4 on the other hand. The fixed base 6 may be used to stop the sliding mechanism 4 mechanically, so as to prevent the sliding mechanism 4 from falling off from an end of the guide rail 3 when the sliding mechanism 4 moves along the guide rail 3. Specifically, referring to FIG. 5 and FIG. 7, the fixed base 6 is designed as an "L" shape, and a mounting hole of the L-shaped fixed base 6 is reserved on the sides of two ends of the guide rail 3. One side of the L-shaped fixed base 6 is connected and fixed with the mounting hole on the side of the guide rail 3 through a bolt, and another side of the L-shaped fixed base 6 is fixed on the reference plane 2.

FIG. 8 shows a structural diagram of a driving mechanism 5 included in a device for maintaining an equipment according to embodiments of the present disclosure.

Referring to FIG. 8, in embodiments of the present disclosure, the driving mechanism 5 includes a support base 51, a hydraulic cylinder 52 and a hydraulic station 53. The support base 51 is arranged on the reference plane 2 to support the hydraulic cylinder 52. The hydraulic cylinder 52 is arranged on the support base 51 and is used to drive the sliding mechanism 4 and the to-be-maintained equipment 1 to move along the guide rail 3. The hydraulic station 53 is fixed on the reference plane 2 and connected with the hydraulic cylinder 52 through an oil pipe 57 to provide pressure oil for the hydraulic cylinder 52. The support base 51 and the hydraulic station 53 are detachably connected with the reference plane 2, which is convenient for timely adjusting the installation position of the driving mechanism 5 according to actual working conditions.

Through the above-mentioned structural design, the hydraulic cylinder 52 may be used to provide a driving force required for moving the to-be-maintained equipment 1. Specifically, when the driving mechanism 5 is provided on the second side of the to-be-maintained equipment 1, if the space on the second side of the to-be-maintained equipment 1 needs to be expanded, the to-be-maintained equipment 1 needs to be driven to move to the first side. At this point, the hydraulic cylinder 52 may apply a thrust to the to-be-maintained equipment 1, pushing the to-be-maintained equipment 1 to move to the second side. If the space on the first side of the to-be-maintained equipment 1 needs to be expanded, the to-be-maintained equipment 1 needs to be driven to move to the second side. At this point, the hydraulic cylinder 52 may apply a pulling force to the to-be-maintained equipment 1, pulling the to-be-maintained equipment 1 to move to the second side.

The above-mentioned "hydraulic station 53" refers to a hydraulic source device consisting of a hydraulic pump, a motor for driving, an oil tank, a directional valve, a throttle valve, an overflow valve, etc. or a hydraulic device including a control valve. The oil is supplied according to a flow direction, pressure and flow rate required by hydraulic cylinder 52, which is applicable to various machines where hydraulic cylinder 52 is separated from hydraulic station 53. The oil pipe 57 is used to connect the hydraulic station 53 and the hydraulic cylinder 52, then the driving mechanism 5 may achieve various specified actions.

Optionally, the hydraulic station 53 is a manual two-way hydraulic pump station, which is connected with the hydraulic cylinder 52 through an oil outlet pipe and an oil return pipe as a circulating circuit. The hydraulic cylinder 52 may be manually controlled to apply a thrust or a pulling force to the to-be-maintained equipment 1. The hydraulic station 53 adopts manual control mode, which has advantages of convenient installation and movement, simple operation, and the like. In addition, the manual drive mode may be combined with the guide rail 3 and the sliding mechanism 4, so that a single person may also move heavy equipment to facilitate the maintenance of the to-be-maintained equipment 1.

It should be noted that the driving mechanism 5 is not limited to manual driving mode. In other embodiments, the driving mechanism 5 may also adopt electric or other driving modes. In addition, the driving mechanism 5 may include more than one hydraulic cylinder 52, that is, the to-be-maintained equipment 1 may be driven to move along the guide rail 3 through a combination of a plurality of hydraulic cylinders 52. It should also be noted that, in addition to the drive mode in embodiments of the present disclosure, the driving mechanism 5 may also be driven by hand screw rod, rack and pinion and other structures.

Furthermore, the driving mechanism 5 further includes a connecting base 54, which is arranged on the piston rod of the hydraulic cylinder 52 for connecting with the sliding mechanism 4 and/or the to-be-maintained equipment 1. According to the invention, the connecting base 54 is fixedly connected with the bottom frame of the to-be-maintained equipment 1, and the to-be-maintained equipment 1 may be pushed or pulled to move by an expansion and contraction of the piston rod of the hydraulic cylinder 52 and the connecting base 54 is connected with the sliding mechanism 4. Since the to-be-maintained equipment 1 is fixed on the sliding mechanism 4, when the driving mechanism 5 drives the sliding mechanism 4 to move, the to-be-maintained equipment 1 may move with the sliding mechanism 4.

In embodiments of the present disclosure, the piston rod of the hydraulic cylinder 52 is provided with a joint bearing, and the connecting base 54 is hinged with the joint bearing around the first rotating shaft 55. The hydraulic cylinder 52 is connected and fixed with the connecting base 54 through the joint bearing and the first rotating shaft 55, which may increase the flexibility of the connection between the connecting base 54 and the hydraulic cylinder 52. In addition, the joint bearing may change a direction of a force applied by the hydraulic cylinder 52 on the connecting base 54, so that the hydraulic cylinder 52 may apply a thrust or a pulling force on the to-be-maintained equipment 1 from different angles, and the driving mechanism 5 may be suitable for driving the to-be-maintained equipment 1 with different sizes. At the same time, the hydraulic cylinder 52 is hinged with the support base 51 fixed on the reference plane 2 around the second rotating shaft 56, and cooperates with the joint bearing and the first rotating shaft 55 between the hydraulic cylinder 52 and the connecting base 54 to make the installation position of the driving mechanism 5 more flexible.

In another embodiment of the present disclosure, the piston rod of the hydraulic cylinder 52 is directly hinged with the connecting base 54 through the first rotating shaft 55, that is, the connecting base 54 may rotate relative to the hydraulic cylinder 52 with the first rotating shaft 55 as a shaft, which may also increase the flexibility of the connection between the connecting base 54 and the hydraulic cylinder 52.

The device for maintaining an equipment in embodiments of the present disclosure is applicable to a situation where a maintenance space on the side of the to-be-maintained equipment is limited. The device for maintaining an equipment may drive the to-be-maintained equipment 1 to move, thereby compressing a working space on one side of the to-be-maintained equipment, expanding a working space on another side of the to-be-maintained equipment, and meeting operation requirements of the to-be-maintained equipment on the side requiring maintenance.

Another embodiment of the present disclosure further provides a method for maintaining an equipment, including: moving the to-be-maintained equipment 1 by using the device for maintaining an equipment described above, so that a maintenance space on a second side of the to-be-maintained equipment 1 increases after the to-be-maintained equipment 1 is moved to a first side, wherein the first side and the second side are respectively located on opposite sides of the to-be-maintained equipment 1. It should be understood that the first side and the second side are merely determined relative to a direction in which the to-be-maintained equipment 1 needs to move, and the first side or the second side is not used to indicate a side of the to-be-maintained equipment 1 in a specific direction. For example, when the to-be-maintained equipment moves in the left and right directions, if the first side represents the left side of the to-be-maintained equipment 1, the second side represents the right side of the to-be-maintained equipment 1; and if the first side represents the right side of to-be-maintained equipment 1, the second side represents the left side of to-be-maintained equipment 1.

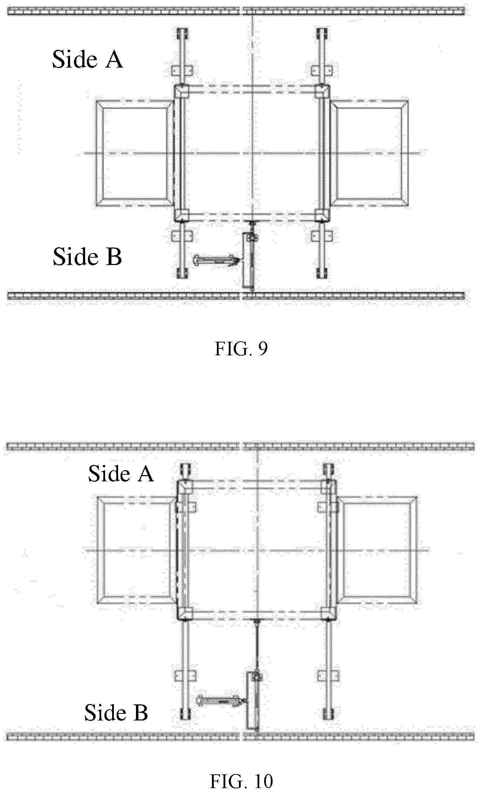

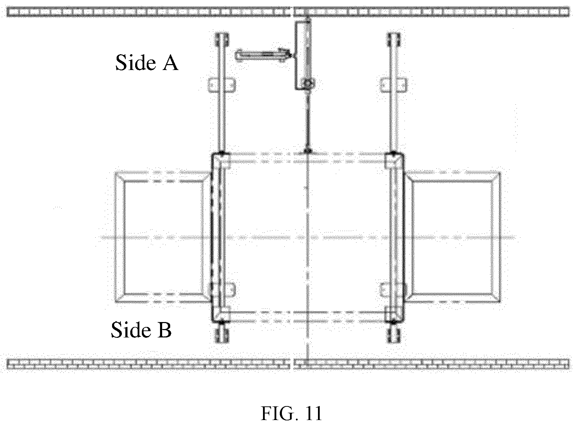

FIG. 9 shows a schematic diagram of an application scene of a method for maintaining an equipment according to embodiments of the present disclosure. FIG. 10 shows a schematic diagram of an application mode of a method for maintaining an equipment according to embodiments of the present disclosure. FIG. 11 shows a schematic diagram of another application mode of a method for maintaining an equipment according to embodiments of the present disclosure.

An exemplary description of the device maintenance method of embodiments of the present disclosure is given below with reference to FIG. 9 to FIG. 11. It should be noted that in FIG. 9 to FIG. 11, for the convenience of description, side A and side B respectively represent opposite sides of the to-be-maintained equipment 1.

Scene I: there is a certain space on side A and side B of the to-be-maintained equipment 1, but neither side may meet the space requirement for maintenance.

As shown in FIG. 9, when the to-be-maintained equipment 1 needs to be maintained on side B, the maintenance space on side B needs to be expanded. At this point, the driving mechanism 5 may be installed on side B to drive the hydraulic cylinder 52 to generate a thrust and push the to-be-maintained equipment 1 to side A, thereby expanding the maintenance space on side B. When the maintenance of the to-be-maintained equipment 1 is completed, the hydraulic cylinder 52 will be driven to generate a pulling force, and the to-be-maintained equipment 1 may be pulled to side B to restore the to-be-maintained equipment 1 to an original position of the to-be-maintained equipment 1.

Scene II: there is no maintenance space on side A of the to-be-maintained equipment 1, and there is sufficient maintenance space on side B of the to-be-maintained equipment 1.

As shown in FIG. 10, when there is no maintenance space on side A of to-be-maintained equipment 1 and there is sufficient maintenance space on side B, if maintenance is required on side A of to-be-maintained equipment 1, the maintenance space on side A needs to be expanded. At this point, the driving mechanism 5 may be installed on side B first, and the hydraulic cylinder 52 may be driven to generate a pulling force, and the to-be-maintained equipment 1 may be pulled to side B to expand the maintenance space on side A.

If the maintenance space on side A is still insufficient, as shown in FIG. 11, the driving mechanism 5 may be transferred to the expanded side A to drive the hydraulic cylinder 52 to generate a thrust, so that the to-be-maintained equipment 1 may continue to move to side B until the space on side A meets the maintenance requirement. After the maintenance is completed, reverse the above-mentioned steps, and the to-be-maintained equipment 1 may return to the original position of the to-be-maintained equipment 1.

Through the method for maintaining an equipment of embodiments of the present disclosure, no matter the size of the maintenance space on two sides of the to-be-maintained equipment 1 is the same or different, as long as at least one of the maintenance spaces on two sides does not meet a size of the maintenance space required by the to-be-maintained equipment 1, the above-mentioned device for maintaining an equipment may be provided to drive the to-be-maintained equipment 1 to move to one side to expand the space on another side of the to-be-maintained equipment 1. With reference to FIG. 9 to FIG. 11, by installing the device for maintaining an equipment that may drive the movement of to-be-maintained equipment 1 between the bottom of to-be-maintained equipment 1 and the reference plane 2, the device for maintaining an equipment may be used to horizontally (in the width direction of to-be-maintained equipment 1) move the overall to-be-maintained equipment 1 left and right, so as to gradually meet the maintenance space requirements on the left and right sides of the to-be-maintained equipment 1.

An application principle of the device for maintaining an equipment and method in embodiments of the present disclosure is: when the original maintenance space on one side of the to-be-maintained equipment 1 is insufficient, the to-be-maintained equipment 1 may be driven to move along the guide rail 3 as a whole by installing a guide rail 3 and a sliding mechanism 4 between the bottom of the to-be-maintained equipment 1 and the reference plane 2, fixing the to-be-maintained equipment 1 to the sliding mechanism 4, and then applying a thrust or a pulling force to the to-be-maintained equipment 1 through the driving mechanism 5. Thus, the space on one side of to-be-maintained equipment 1 is compressed, and the working space on another side of to-be-maintained equipment 1 is expanded to meet the requirements for maintenance space on two sides of the to-be-maintained equipment 1 when the space on two sides of to-be-maintained equipment 1 is narrow or there is only one side maintenance space.

It should be noted that the device for maintaining an equipment and method of embodiments of the present disclosure are applicable to maintenance of any type of equipment, especially for maintenance of some large equipment that requires cooperation of more than one person to move. For example, the to-be-maintained equipment 1 may be a security inspection equipment. By provided the above-mentioned device for maintaining an equipment at the bottom of the security inspection equipment, a single person may drive the security inspection equipment to move left and right, which may make the maintenance operation more convenient. It should be understood that an application object of the device for maintaining an equipment and method in embodiments of the present disclosure is not limited to the security inspection equipment.

The device for maintaining an equipment and method according to embodiments of the present disclosure have at least one of the following technical effects.
(1) When the maintenance space on two sides of the to-be-maintained equipment 1 is insufficient, the to-be-maintained equipment 1 may be quickly moved by means of left and right translation to meet the maintenance space requirement of to-be-maintained equipment 1 on one side.
(2) The driving mechanism 5 may be driven manually. Through the cooperation of the hydraulic station 53 and the hydraulic cylinder 52, the hydraulic cylinder 52 may be used to apply a thrust or a pulling force to the to-be-maintained equipment 1, and the driving mechanism 5 may be operated by a single person. The operation and installation are convenient and flexible.
(3) Based on the different structures of the to-be-maintained equipment 1, the guide rail 3 and the sliding mechanism 4 may be adaptively installed between the bottom frame of to-be-maintained equipment 1 and the reference plane 2 to make full use of the space. At the same time, the guide rail 3 may disperse the load of the to-be-maintained equipment 1 to the reference plane 2.

## Claims

1. A device for maintaining an equipment, configured to maintain a to-be-maintained equipment (1), the to-be-maintained equipment (1) comprising a first side and a second side opposite to the first side, and the device comprising:
at least one guide rail (3) extending in a first direction, wherein the first direction is a direction pointing from the first side to the second side;
a sliding mechanism (4) arranged on the guide rail (3) and configured to support the to-be-maintained equipment (1); and
a driving mechanism (5) configured to drive the sliding mechanism (4) and the to-be-maintained equipment (1) to move along the guide rail (3),
wherein the device for maintaining an equipment is configured to allow the to-be-maintained equipment (1) to move along the guide rail (3) to change a maintenance space on the first side or the second side;
wherein the driving mechanism (5) comprises: a support base (51), and a hydraulic cylinder (52) arranged on the support base (51) and configured to drive the sliding mechanism (4) and the to-be-maintained equipment (1) to move;
wherein the driving mechanism (5) further comprises: a connecting base (54) arranged on a piston rod of the hydraulic cylinder (52) and configured to be connected with the sliding mechanism (4) and/or the to-be-maintained equipment (1) and push and pull the to-be-maintained equipment (1) to move;
wherein the piston rod of the hydraulic cylinder (52) is provided with a joint bearing, the connecting base (54) is hinged with the joint bearing around a first rotating shaft (55), the hydraulic cylinder (52) is hinged with the support base (51) around a second rotating shaft (56), and the hydraulic cylinder (52) is connected with the connecting base (54) through the joint bearing and the first rotating shaft (55);
wherein the sliding mechanism (4) comprises a frame (41) configured to support the to-be-maintained equipment (1), the frame (41) is provided with a positioning block (44) configured to be fixedly connected with the to-be-maintained equipment (1), and the positioning block (44) is provided with a through hole and configured to be connected and fixed with a side of the to-be-maintained equipment (1) through a bolt and the through hole.

2. The device according to claim 1, wherein the sliding mechanism (4) comprises:
a roller (42) rotatably arranged on the frame, wherein the roller (42) is configured to roll along the guide rail (3) under an action of an external force, so that the frame (41) and the to-be-maintained equipment (1) move along the guide rail (3).

3. The device according to claim 2, wherein the frame (41) has a load-bearing side (411), and the load-bearing side (411) is provided with a damping layer (43),
wherein the to-be-maintained equipment (1) is placed on the damping layer (43) in a state where the to-be-maintained equipment (1) is moved along the guide rail (3).

4. The device according to claim 2, wherein the guide rail (3) adopts an H-shaped steel, and the roller is configured to roll in a side groove of the H-shaped steel.

5. The device according to claim 1, wherein each of the at least one guide rail (3) is provided with two sliding mechanisms (4),
the two sliding mechanisms (4) are respectively located on two sides of the to-be-maintained equipment (1) in a state where the to-be-maintained equipment (1) is moved along the guide rail (3).

6. The device according to claim 5, wherein two ends of the guide rail (3) are provided with a fixed base (6) configured to fix the guide rail (3) and limit the sliding mechanism (4).

7. A method for maintaining an equipment, comprising:
moving the to-be-maintained equipment (1) by using the device for maintaining an equipment according to any one of claims 1-6, so that a maintenance space on a second side of the to-be-maintained equipment (1) increases after the to-be-maintained equipment (1) is moved to a first side,
wherein the first side and the second side are respectively located on opposite sides of the to-be-maintained equipment (1).

## Patentansprüche

1. Eine Vorrichtung zum Warten eines Geräts, konfiguriert zum Warten eines zu wartenden Geräts (1), wobei das zu wartende Gerät (1) eine erste Seite und eine der ersten Seite gegenüberliegende zweite Seite umfasst, und wobei die Vorrichtung umfasst:
mindestens eine Führungsschiene (3), die sich in einer ersten Richtung erstreckt, wobei die erste Richtung eine Richtung ist, die von der ersten Seite zur zweiten Seite weist;
einen Schiebemechanismus (4), der an der Führungsschiene (3) angeordnet ist und konfiguriert ist, das zu wartende Gerät (1) zu tragen; und
einen Antriebsmechanismus (5), der konfiguriert ist, den Schiebemechanismus (4) und das zu wartende Gerät (1) entlang der Führungsschiene (3) zu bewegen,
wobei die Vorrichtung zum Warten eines Geräts konfiguriert ist, es dem zu wartenden Gerät (1) zu ermöglichen, sich entlang der Führungsschiene (3) zu bewegen, um einen Wartungsraum auf der ersten Seite oder der zweiten Seite zu verändern;
wobei der Antriebsmechanismus (5) umfasst: eine Stützbasis (51) und einen Hydraulikzylinder (52), der auf der Stützbasis (51) angeordnet ist und konfiguriert ist, den Schiebemechanismus (4) und das zu wartende Gerät (1) zu bewegen;
wobei der Antriebsmechanismus (5) ferner umfasst: eine Verbindungsbasis (54), die an einer Kolbenstange des Hydraulikzylinders (52) angeordnet ist und konfiguriert ist, mit dem Schiebemechanismus (4) und/oder dem zu wartenden Gerät (1) verbunden zu werden und das zu wartende Gerät (1) zu schieben und zu ziehen, um es zu bewegen;
wobei die Kolbenstange des Hydraulikzylinders (52) mit einem Gelenklager versehen ist, die Verbindungsbasis (54) um eine erste Drehachse (55) mit dem Gelenklager schwenkbar verbunden ist, der Hydraulikzylinder (52) um eine zweite Drehachse (56) mit der Stützbasis (51) schwenkbar verbunden ist und der Hydraulikzylinder (52) über das Gelenklager und die erste Drehachse (55) mit der Verbindungsbasis (54) verbunden ist;
wobei der Schiebemechanismus (4) einen Rahmen (41) umfasst, der konfiguriert ist, das zu wartende Gerät (1) zu tragen, der Rahmen (41) mit einem Positionierblock (44) versehen ist, der konfiguriert ist, fest mit dem zu wartenden Gerät (1) verbunden zu werden, und der Positionierblock (44) mit einer Durchgangsöffnung versehen ist und konfiguriert ist, über einen Bolzen und die Durchgangsöffnung mit einer Seite des zu wartenden Geräts (1) verbunden und fixiert zu werden.

2. Die Vorrichtung nach Anspruch 1, wobei der Schiebemechanismus (4) umfasst:
eine Rolle (42), die drehbar an dem Rahmen angeordnet ist, wobei die Rolle (42) konfiguriert ist, unter der Wirkung einer äußeren Kraft entlang der Führungsschiene (3) zu rollen, sodass sich der Rahmen (41) und das zu wartende Gerät (1) entlang der Führungsschiene (3) bewegen.

3. Die Vorrichtung nach Anspruch 2, wobei der Rahmen (41) eine lasttragende Seite (411) aufweist und die lasttragende Seite (411) mit einer Dämpfungsschicht (43) versehen ist,
wobei das zu wartende Gerät (1) in einem Zustand, in dem das zu wartende Gerät (1) entlang der Führungsschiene (3) bewegt wird, auf der Dämpfungsschicht (43) angeordnet ist.

4. Die Vorrichtung nach Anspruch 2, wobei die Führungsschiene (3) einen H-förmigen Stahl verwendet und die Rolle konfiguriert ist, in einer seitlichen Nut des H-förmigen Stahls zu rollen.

5. Die Vorrichtung nach Anspruch 1, wobei jede der mindestens einen Führungsschienen (3) mit zwei Schiebemechanismen (4) versehen ist,
wobei die zwei Schiebemechanismen (4) jeweils an zwei Seiten des zu wartenden Geräts (1) angeordnet sind in einem Zustand, in dem das zu wartende Gerät (1) entlang der Führungsschiene (3) bewegt wird.

6. Die Vorrichtung nach Anspruch 5, wobei an zwei Enden der Führungsschiene (3) jeweils eine feste Basis (6) vorgesehen ist, die konfiguriert ist, die Führungsschiene (3) zu fixieren und den Schiebemechanismus (4) zu begrenzen.

7. Ein Verfahren zum Warten eines Geräts, umfassend:
Bewegen des zu wartenden Geräts (1) unter Verwendung der Vorrichtung zum Warten eines Geräts nach einem der Ansprüche 1 bis 6, sodass sich ein Wartungsraum auf einer zweiten Seite des zu wartenden Geräts (1) vergrößert, nachdem das zu wartende Gerät (1) zu einer ersten Seite bewegt wurde,
wobei die erste Seite und die zweite Seite jeweils auf gegenüberliegenden Seiten des zu wartenden Geräts (1) angeordnet sind.

## Revendications

1. Dispositif de maintenance d'un équipement, conçu pour entretenir un équipement à entretenir (1), l'équipement à entretenir (1) comprenant un premier côté et un deuxième côté faisant face au premier côté, et le dispositif comprenant:
au moins un rail de guidage (3) s'étendant dans une première direction, la première direction étant une direction allant du premier côté au deuxième côté;
un mécanisme coulissant (4) disposé sur le rail de guidage (3) et conçu pour supporter l'équipement à entretenir (1); et
un mécanisme de commande (5) conçu pour amener le mécanisme coulissant (4) et l'équipement à entretenir (1) à se déplacer le long du rail de guidage (3),
dans lequel le dispositif destiné à entretenir un équipement est conçu pour permettre à l'équipement à entretenir (1) à se déplacer le long du rail de guidage (3) afin de changer d'espace d'entretien sur le premier côté ou le deuxième côté;
dans lequel le mécanisme de commande (5) comprend: une base de support (51) et un vérin hydraulique (52) disposé sur la base de support (51) et conçu pour amener le mécanisme coulissant (4) et l'équipement à entretenir (1) à se déplacer;
dans lequel le mécanisme de commande (5) comprend en outre: une base de liaison (54) disposée sur une tige de piston du vérin hydraulique (52) et conçue pour être reliée au mécanisme coulissant (4) et/ou à l'équipement à entretenir (1) et pour pousser et tirer l'équipement à entretenir (1) afin de le déplacer;
dans lequel la tige de piston du vérin hydraulique (52) est pourvue d'un palier articulé, la base de liaison (54) est articulée avec le palier articulé autour d'un premier axe de rotation (55), le vérin hydraulique (52) est articulé avec la base de support (51) autour d'un deuxième axe de rotation (56), et le vérin hydraulique (52) est relié à la base de liaison (54) par l'intermédiaire du palier articulé et du premier axe de rotation (55);
dans lequel le mécanisme coulissant (4) comprend un châssis (41) conçu pour supporter l'équipement à entretenir (1), le châssis (41) est muni d'un bloc de positionnement (44) conçu pour être relié à demeure à l'équipement à entretenir (1), et le bloc de positionnement (44) est muni d'un trou traversant et conçu pour être relié et fixé à un côté de l'équipement à entretenir (1) à l'aide d'un boulon et du trou traversant.

2. Dispositif selon la revendication 1, dans lequel le mécanisme coulissant (4) comprend:
un rouleau (42) monté en rotation sur le châssis, le rouleau (42) étant conçu pour rouler le long du rail de guidage (3) sous l'action d'une force externe, de sorte que le châssis (41) et l'équipement à entretenir (1) se déplacent le long du rail de guidage (3).

3. Dispositif selon la revendication 2, dans lequel le châssis (41) comporte un côté porteur (411), et le côté porteur (411) est muni d'une couche d'amortissement (43),
dans lequel l'équipement à entretenir (1) est placé sur la couche d'amortissement (43) lorsque l'équipement à entretenir (1) est déplacé le long du rail de guidage (3).

4. Dispositif selon la revendication 2, dans lequel le rail de guidage (3) adopte une forme en H en acier, et le rouleau est conçu pour rouler dans une rainure latérale de l'acier en forme de H.

5. Dispositif selon la revendication 1, dans lequel chacun des au moins un rail de guidage (3) est muni de deux mécanismes coulissants (4),
les deux mécanismes coulissants (4) sont respectivement situés sur deux côtés de l'équipement à entretenir (1) lorsque l'équipement à entretenir (1) est déplacé le long du rail de guidage (3).

6. Dispositif selon la revendication 5, dans lequel les deux extrémités du rail de guidage (3) sont pourvues d'une base fixe (6) conçue pour fixer le rail de guidage (3) et limiter le mécanisme coulissant (4).

7. Procédé de maintenance d'un équipement, comprenant:
le déplacement de l'équipement à entretenir (1) à l'aide du dispositif d'entretien d'équipement selon l'une quelconque des revendications 1 à 6, de sorte que l'espace d'entretien sur un deuxième côté de l'équipement à entretenir (1) augmente après que l'équipement à entretenir (1) a été déplacé vers un premier côté,
dans lequel le premier côté et le deuxième côté sont respectivement situés sur les côtés opposés de l'équipement à entretenir (1).
